# EUROPÄISCHE PATENTSCHRIFT

(11) **EP 4 066 645 B1**
(45) Veröffentlichungstag und Bekanntmachung des Hinweises auf die Patenterteilung: **24.12.2025**
(21) Anmeldenummer: 22161537.0
(22) Anmeldetag: 11.03.2022
(51) Int. Cl.: A21C 3/08, A21C 3/06, A21C 9/08

(54) **TEIGVERARBEITUNGSVORRICHTUNG**
DOUGH PROCESSING DEVICE
DISPOSITIF DE TRAITEMENT DE LA PÂTE

(30) Priorität: 31.03.2021 DE 102021108139
(43) Veröffentlichungstag der Anmeldung: 05.10.2022
(60) Teilanmeldung: 25210951.7
(73) Patentinhaber: Fritsch Bakery Technologies GmbH & Co. KG, 97348 Markt Einersheim (DE)
(72) Erfinder: Bernhardt, Udo, 97346 Iphofen (DE)
(74) Vertreter: Grünecker Patent- und Rechtsanwälte PartG mbB

(56) Entgegenhaltungen:
- EP-A1- 3 750 403
- EP-B1- 0 647 405
- DE-B4- 102008 036 624
- US-A- 3 915 282

## Beschreibung

Die Anmeldung bezieht sich auf Teigverarbeitungsvorrichtungen sowie Verfahren zum Verarbeiten von Teig.

Aus dem Stand der Technik sind Vorrichtungen zum Formen von Teig bekannt, die Querfördereinrichtungen aufweisen, um Teigstränge quer zu einem Längsförderband auszurichten. In der DE 10 2008 036 624 B4 wird eine Vorrichtung zum Formen von Teiglingen offenbart, die ein Transportband mit einem Obertrum aufweist. Auf dem Obertrum werden strangförmige Teiglinge Transportiert und dann an ein Quer-Transportband übergeben. Dort wird der Teigling quer zu der Förderrichtung des Transportbands gefördert um ihn relativ zu dem Transportband zu positionieren. Durch Schwenken des Quer-Transportbandes und die Gravitation wird der Teigling wieder an das Transportband übergeben. Diesmal wird er jedoch zwischen dem Untertrum des Transportbandes und einer sogenannten Hosenplatte weiter gefördert.

Die DE 10 2018 004 351 B3 offenbart eine Vorrichtung zum Formen von Teigsträngen. Auch hier werden Teigstränge von einem Längsförderband an eine Querfördereinrichtung übergeben, wo der Teigstrang quer zu dem Längsförderband positioniert wird. Danach wird der Teigstrang an eine unterhalb des Längsförderbands angeordnete Längsfördereinrichtung übergeben, indem er durch eine Abschiebeeinrichtung von der Querfördereinrichtung herunter geschoben wird.

In der US 3 915 282 A wird eine Zentrieranordnung für Teigportionen offenbart. Auch dort ist zwischen zwei Förderbändern ein Zwischenförderer vorgesehen, welcher die Teigportionen mittig zu den Förderbändern ausrichtet. Auch hier wird die Position der Teigportionen erfasst, während sie auf diesem Zwischenförderer angeordnet sind.

In allen vorbeschriebenen Systemen wird die Position der Teigstränge durch Sensoren erfasst, während sie sich auf der Querfördereinrichtung befinden.

Die EP 0 647 405 B1 offenbart ein Verfahren zum Anpassen der Position von aufgerollten Croissant-Teigstücken. Dabei wird die Form der bereits zur Croissant-Form aufgewickelten Teigstücke genutzt, die sich auf sogenannten konkaven Walzen durch deren Formgebung automatisch zentrieren. Eine Erfassung der Position der Croissant-Teigstücke ist hierbei nicht nötig.

In der EP 3 750 403 A1 wird eine Vorrichtung zum Ausrichten von Teigstücken offenbart. Die Vorrichtung umfasst einen ersten Förderer und einen zweiten Förderer zum Fördern der Teigstücke in einer Förderrichtung. In einer Lücke zwischen den Förderern sind drei Transfereinheiten Angeordnet. Diese sind dazu eingerichtet, auf ihnen transportierte Teigstücke unabhängig voneinander mit einer senkrecht zu der Förderrichtung orientierten Richtungskomponente zu bewegen. Die Vorrichtung umfasst des Weiteren drei Messeinheiten zum Bestimmen einer Abweichung der Position jeweils eines Teigstücks auf dem ersten Förderer in einer Breitenrichtung relativ zu einer vorbestimmten Position.

Es ist eine Aufgabe der Erfindung, einen höheren Durchsatz an Teiglingen zu ermöglichen. Diese Aufgabe wird gelöst durch eine Teigverarbeitungsvorrichtung mit den Merkmalen des Anspruchs 1 bzw. durch ein Verfahren mit den Merkmalen des Anspruchs 9.

Es wird eine Teigverarbeitungsvorrichtung beschrieben, die eine erste Förderanordnung, die zum Fördern von Teigstücken entlang eines Produktionspfads konfiguriert ist, und eine zweite Förderanordnung, die zum Fördern der Teigstücke entlang des Produktionspfads konfiguriert ist, umfasst. Die Teigverarbeitungsvorrichtung umfasst des Weiteren eine Ausrichteinheit, die entlang des Produktionspfads zwischen der ersten Förderanordnung und der zweiten Förderanordnung angeordnet und dazu konfiguriert ist, die Teigstücke von der ersten Förderanordnung aufzunehmen, quer zu dem Produktionspfad zu bewegen und an die zweite Förderanordnung zu übergeben. Die Teigverarbeitungsvorrichtung zeichnet sich durch eine Sensoranordnung aus, die dazu konfiguriert ist, eine Ausdehnung und/oder eine Positionierung der auf der ersten Förderanordnung angeordneten Teigstücke in einer Messrichtung zu bestimmen, wobei die Messrichtung quer, insbesondere senkrecht, zu dem Produktionspfad orientiert ist.

Durch die Bestimmung der Ausdehnung und/oder der Positionierung, während die Teigstücke noch auf der ersten Förderanordnung angeordnet sind, kann ein schnelleres Ausrichten der Teigstücke erfolgen, da die Teigstücke nach dem Ablegen auf der Ausrichteinheit direkt zu der gewünschten Position bewegt werden können. Dagegen erfolgt im Stand der Technik nach der Übergabe an die dort beschriebenen Querfördereinrichtungen zunächst eine Vermessung, bevor die Teigstränge tatsächlich ausgerichtet werden.

Die zwei Förderanordnungen können an ein und derselben Fördervorrichtung vorgesehen sein. Beispielsweise kann die erste Fördervorrichtung ein Obertrum eines Förderbandes und die zweite Fördervorrichtung ein Untertrum des Förderbandes umfassen. Auch eine umgekehrte Variante ist denkbar. Es ist auch denkbar, dass die erste und die zweite Förderanordnung an unterschiedlichen Fördervorrichtungen vorgesehen sind. Z. B. kann die erste Förderanordnung ein Obertrum eines ersten Förderbandes und die zweite Förderanordnung ein Obertrum eines zweiten Förderbandes umfassen.

Die Sensoranordnung umfasst zwei Sensoreinheiten, wobei die Sensoreinheiten auf einander gegenüberliegenden Seiten der ersten Förderanordnung angeordnet sind. Besonders günstig ist es, wenn die zwei Sensoreinheiten bezogen auf die erste Förderanordnung einander gegenüberliegend angeordnet sind. Eine solche Anordnung kann die Vermessung der Ausdehnung und/oder der Positionierung der auf der ersten Förderanordnung angeordneten Teigstücke durch besonders einfache Sensoren ermöglichen, z. B. durch Laufzeitmessung von, vorzugsweise elektromagnetischen, Wellen. Bei den Wellen kann es sich bspw. um Lichtwellen, Schallwellen, Radarwellen oder Mikrowellen handeln.

Es ist vorstellbar, dass die Ausrichteinheit dazu konfiguriert ist, die Teigstücke basierend auf von der Sensoranordnung empfangenen Signalen quer zu dem Produktionspfad zu bewegen. Dadurch kann die Position der Teigstücke, insbesondere relativ zu der zweiten Förderanordnung, genauer einstellbar sein. Dabei ist es denkbar, dass die Ausrichteinheit sich zunächst in einer Standardposition befindet, nach dem Empfangen eines Teigstücks basierend auf von der Sensoranordnung empfangenen Signalen derart verfahren wird, dass das Teigstück an eine gewünschte Position bewegt wird, das Teigstück an die zweite Förderanordnung übergibt und schließlich an die Standardposition zurückkehrt. Alternativ ist es denkbar, dass die Ausrichteinheit bereits vor dem Empfangen des Teigstücks basierend auf von der Sensoranordnung empfangenen Signalen eine Position anfährt, die so gewählt ist, dass das Teigstück nach Rückkehr der Ausrichteinheit zu einer Standardposition auf die gewünschte Weise positioniert ist, das Teigstück von der ersten Förderanordnung übernimmt, an die Standardposition zurückkehrt und schließlich das Teigstück an die zweite Förderanordnung übergibt.

Vorzugsweise kann die Ausrichteinheit dazu konfiguriert sein, die Teigstücke basierend auf von der Sensoranordnung empfangenen Signalen relativ zu der zweiten Förderanordnung in einer Richtung, die senkrecht zu dem Produktionspfad orientiert ist, zu zentrieren. Als relativ zu der zweiten Förderanordnung in einer Richtung, die senkrecht zu dem Produktionspfad orientiert ist, zentriert kann ein Teigstück angesehen werden, welches von beiden Seitenrändern der zweiten Förderanordnung in der besagten Richtung gleichgroße Abstände aufweist. Eine Zentrierung von Teigstücken kann insbesondere bei der Produktion von Brezeln vorteilhaft sein, da diese aus Strängen hergestellt werden, welche eine Verdickung aufweisen. Um eine gewünschte, symmetrische Brezelform reproduzierbar zu erreichen, kann es vorteilhaft sein, wenn die Verdickung mittig in dem Strang angeordnet ist. Dies kann durch eine Zentrierung der Teigstränge vor dem sogenannten Langrollen (hierbei wird die Verdickung erzeugt) erleichtert werden.

Die Ausrichteinheit kann eine dritte Förderanordnung aufweisen, die zum Fördern der Teigstücke parallel zu dem Produktionspfad konfiguriert ist. Dadurch kann das Übergeben des Teigstücks an die zweite Förderanordnung unterstützt werden, was die Verarbeitungsgeschwindigkeit erhöhen kann.

Besonders günstig kann es sein, wenn die dritte Förderanordnung dazu konfiguriert ist, die Teigstücke wahlweise in eine von zwei einander entgegengesetzten Richtungen zu fördern. Dadurch kann, wie oben erwähnt, das Übergeben des Teigstücks an die zweite Förderanordnung unterstützt werden und/oder ein als fehlerhaft eingestuftes Teigstück in die entgegengesetzte Richtung gefördert und z. B. aus dem weiteren Produktionsprozess entfernt werden. Die entgegengesetzten Richtungen können beide parallel zu dem Produktionspfad, insbesondere zu dessen Verlauf an der Ausrichteinheit, orientiert sein. Dabei kann eine der Richtungen an der Ausrichteinheit in die gleiche Richtung orientiert sein wie der Produktionspfad und die andere kann an der Ausrichteinheit dem Produktionspfad entgegengesetzt orientiert sein.

Die dritte Förderanordnung kann z. B. ein Förderband aufweisen.

Des Weiteren wird ein Verfahren zum Verarbeiten von Teig beschreiben. Das Verfahren umfasst ein Fördern von Teigstücken entlang eines Produktionspfads durch eine erste Förderanordnung, Übergeben der Teigstücke von der ersten Förderanordnung an eine Ausrichteinheit, Bewegen der Teigstücke quer zu dem Produktionspfad und Übergeben der Teigstücke von der Ausrichteinheit an eine zweite Förderanordnung. Das Verfahren zeichnet sich aus durch Bestimmen einer Ausdehnung und/oder einer Positionierung der auf der ersten Förderanordnung angeordneten Teigstücke in einer Messrichtung, wobei die Messrichtung quer, insbesondere senkrecht, zu dem Produktionspfad orientiert ist.

Wie weiter oben bereits erwähnt, kann durch die Bestimmung der Ausdehnung und/oder der Positionierung, während die Teigstücke noch auf der ersten Förderanordnung angeordnet sind, ein schnelleres Ausrichten der Teigstücke erfolgen, da die Teigstücke nach dem Ablegen auf der Ausrichteinheit direkt zu der gewünschten Position bewegt werden können. Dagegen erfolgt im Stand der Technik nach der Übergabe an die dort beschriebenen Querfördereinrichtungen zunächst eine Vermessung, bevor die Teigstränge tatsächlich ausgerichtet werden.

Wie bei der offenbarten Vorrichtung auch, können die zwei Förderanordnungen an ein und derselben Fördervorrichtung vorgesehen sein. Beispielsweise kann die erste Fördervorrichtung ein Obertrum eines Förderbandes und die zweite Fördervorrichtung ein Untertrum des Förderbandes umfassen. Auch eine umgekehrte Variante ist denkbar. Es ist auch denkbar, dass die erste und die zweite Förderanordnung an unterschiedlichen Fördervorrichtungen vorgesehen sind. Z. B. kann die erste Förderanordnung ein Obertrum eines ersten Förderbandes und die zweite Förderanordnung ein Obertrum eines zweiten Förderbandes umfassen.

Vorzugsweise können die Teigstücke basierend auf von der Sensoranordnung empfangenen Signalen quer zu dem Produktionspfad bewegt werden. Dadurch kann die Position der Teigstücke, insbesondere relativ zu der zweiten Förderanordnung, genauer einstellbar sein. Dabei ist es denkbar, dass die Ausrichteinheit sich zunächst in einer Standardposition befindet, nach dem Empfangen eines Teigstücks basierend auf von der Sensoranordnung empfangenen Signalen derart verfahren wird, dass das Teigstück an eine gewünschte Position bewegt wird, das Teigstück an die zweite Förderanordnung übergibt und schließlich an die Standardposition zurücckehrt. Alternativ ist es denkbar, dass die Ausrichteinheit bereits vor dem Empfangen des Teigstücks basierend auf von der Sensoranordnung empfangenen Signalen eine Position anfährt, die so gewählt ist, dass das Teigstück nach Rückkehr der Ausrichteinheit zu einer Standardposition auf die gewünschte Weise positioniert ist, das Teigstück von der ersten Förderanordnung übernimmt, an die Standardposition zurückkehrt und schließlich das Teigstück an die zweite Förderanordnung übergibt.

Es ist denkbar, dass die Teigstücke basierend auf von der Sensoranordnung empfangenen Signalen relativ zu der zweiten Förderanordnung in einer Richtung, die senkrecht zu dem Produktionspfad orientiert ist, zentriert werden. Als relativ zu der zweiten Förderanordnung in einer Richtung, die senkrecht zu dem Produktionspfad orientiert ist, zentriert kann ein Teigstück angesehen werden, welches von beiden Seitenrändern der zweiten Förderanordnung in der besagten Richtung gleichgroße Abstände aufweist. Eine Zentrierung von Teigstücken kann insbesondere bei der Produktion von Brezeln vorteilhaft sein, da diese aus Strängen hergestellt werden, welche eine Verdickung aufweisen. Um eine gewünschte, symmetrische Brezelform reproduzierbar zu erreichen, kann es vorteilhaft sein, wenn die Verdickung mittig in dem Strang angeordnet ist. Dies kann durch eine Zentrierung der Teigstränge vor dem sogenannten Langrollen (hierbei wird die Verdickung erzeugt) erleichtert werden.

Die Anmeldung bezieht sich auf Teigverarbeitungsvorrichtungen sowie Verfahren der vorstehend beschriebenen Art. Im Folgenden wird ein Ausführungsbeispiel anhand von Zeichnungen beispielhaft erläutert.
Fig.1 zeigt eine schematische Seitenansicht einer Teigverarbeitungsvorrichtung gemäß einem Ausführungsbeispiel.
Fig. 2 Zeigt eine schematische Perspektivansicht der Ausrichteinheit mit Teilen der ersten und zweiten Förderanordnung.

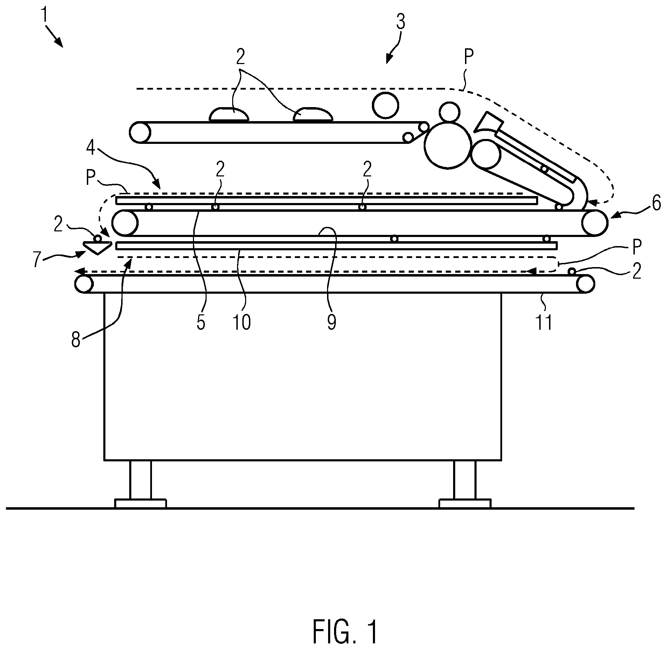

In Figur 1 ist eine schematische Seitenansicht einer Teigverarbeitungsvorrichtung 1 dargestellt. Die Teigverarbeitungsvorrichtung 1 kann dazu konfiguriert sein, Teigstücke 2 entlang eines Produktionspfads P zu verarbeiten. Dazu kann die Teigverarbeitungsvorrichtung 1 beispielsweise einen Wickler 3 umfassen. Der Wickler 3 kann dazu konfiguriert sein, die zunächst im Wesentlichen kugelförmigen Teigstücke 2 zu länglichen, insbesondere strangförmigen, Teigstücken zu verarbeiten.

Die Teigverarbeitungsvorrichtung 1 kann des Weiteren eine erste Förderanordnung 4 umfassen. Die erste Förderanordnung 4 kann entlang des Produktionspfads P auf den Wickler 3 folgen. Die erste Förderanordnung 4 kann zum Fördern der Teigstücke 2 entlang des Produktionspfads P konfiguriert sein. Wie im vorliegenden Ausführungsbeispiel gezeigt, kann die erste Förderanordnung 4 ein erstes Trum 5, vorliegend ein Obertrum, eines Förderbandes 6 umfassen. Die erste Förderanordnung 4 kann zum Beispiel, wie im vorliegenden Ausführungsbeispiel, als eine Langrollvorrichtung ausgestaltet sein, die dazu konfiguriert ist, die Teigstücke 2 auf eine größere Länge auszurollen. Dazu kann die erste Förderanordnung eine erste Wirklplatte 5a umfassen, die dem ersten Trum 5 gegenüberliegend angeordnet sein kann.

Die Teigverarbeitungsvorrichtung 1 kann eine Ausrichteinheit 7 umfassen, die später noch näher beschrieben werden wird. Die Ausrichteinheit 7 kann entlang des Produktionspfads P auf die erste Förderanordnung 4 folgend vorgesehen sein.

Die Teigverarbeitungsvorrichtung 1 kann des Weiteren eine zweite Förderanordnung 8 umfassen. Die zweite Förderanordnung 8 kann entlang des Produktionspfads P auf die Ausrichteinheit 7 folgend angeordnet sein. Die zweite Förderanordnung 8 kann zum Fördern der Teigstücke 2 entlang des Produktionspfads P konfiguriert sein. Die zweite Förderanordnung 8 kann, wie im Ausführungsbeispiel gezeigt, ein zweites Trum 9, vorliegend ein Untertrum, des Förderbands 6 umfassen. Wie anhand des vorliegend erläuterten Ausführungsbeispiels erkennbar ist, können die zwei Förderanordnungen 4, 8, wie hier z. B. das erste und das zweite Trum 5, 9, an ein und derselben Fördervorrichtung, wie hier z. B. an dem Förderband 6 vorgesehen sein.

Die zweite Förderanordnung 8 kann des Weiteren eine zweite Wirkplatte 10 umfassen. Die zweite Förderanordnung 8 kann derart konfiguriert sein, dass die Teigstücke 2 zwischen dem zweiten Trum 9 und der zweiten Wirkplatte 10 entlang des Produktionspfads P gefördert werden. Dabei kann die zweite Förderanordnung 8 derart konfiguriert sein, dass die Teigstücke 2 zwischen der zweiten Wirkplatte 10 und dem zweiten Trum 9 langgerollt werden.

Die Teigverarbeitungsvorrichtung 1 kann des Weiteren ein Abtransportband 11 umfassen. Das Abtransportband 11 kann dazu konfiguriert sein, die Teigstücke 2 zur weiteren Verarbeitung weiter zu fördern. Auch wenn dies im vorliegenden Ausführungsbeispiel nicht bildlich dargestellt ist, kann alternativ oder zusätzlich zwischen der zweiten Förderanordnung 8 und dem Abtransportband 11 eine Ausrichteinheit, wie sie im Folgenden noch näher beschrieben wird, vorgesehen sein. In einem solchen Fall können die Erläuterungen bezüglich der ersten Förderanordnung 4 auf die zweite Förderanordnung 8 und die Erläuterungen bezüglich der zweiten Förderanordnung 8 auf das Abtransportband 11 anwendbar sein. Insofern kann eine solche Konfiguration einer Ausrichteinheit als Beispiel für eine Konfiguration angesehen werden, in der die Ausrichteinheit zwischen zwei Förderanordnungen angeordnet ist, die an unterschiedlichen Fördervorrichtungen vorgesehen sind.

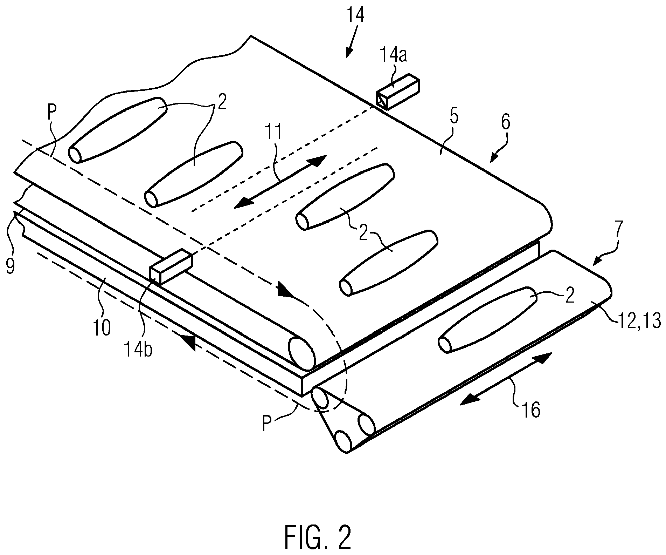

In Figur 2 ist eine perspektivische Ansicht der Ausrichteinheit 7 sowie Teilen der ersten und zweiten Förderanordnungen 4, 8 schematisch dargestellt. Hier ist erkennbar, dass die Ausrichteinheit 7 eine dritte Förderanordnung 12, im vorliegenden Ausführungsbeispiel ein Förderband 13, aufweisen kann. Die Ausrichteinheit 7, insbesondere das Förderband 13, kann dazu konfiguriert sein, das Teigstück 2 in Richtung des Produktionspfads P zu fördern und an die zweite Förderanordnung 8 zu übergeben. Außerdem kann die Ausrichteinheit 7, insbesondere das Förderband 13, dazu konfiguriert sein, ein als fehlerhaft erkanntes Teigstück 2 in einer Richtung, die dem Produktionspfad P entgegengesetzt ist, zu fördern. Dann kann das als fehlerhaft erkannte Teigstück 2 nicht an die zweite Förderanordnung 8 übergeben werden, sondern kann an der der zweiten Förderanordnung 8 gegenüberliegenden Seite der Ausrichteinheit 7 ausgeworfen werden.

Des Weiteren ist erkennbar, dass die Teigverarbeitungsvorrichtung 1 eine Sensoranordnung 14 umfassen kann. Die Sensoranordnung 14 kann dazu konfiguriert sein, eine Ausdehnung und/oder eine Positionierung der auf der ersten Förderanordnung 4 angeordneten Teigstücke 2 zu bestimmen. Diese Bestimmung kann in einer Messrichtung M erfolgen. Die Messrichtung M kann quer, insbesondere senkrecht zu dem Produktionspfad P orientiert sein.

Die Sensoranordnung 14 kann zwei Sensoreinheiten, insbesondere eine erste Sensoreinheit 14a und eine zweite Sensoreinheit 14b umfassen. Wie in Figur 2 zu erkennen, können die erste Sensoreinheit 14b und die zweite Sensoreinheit 14a aufeinander gegenüberliegenden Seiten der ersten Förderanordnung 4 angeordnet sein. Die Sensoreinheiten 14a, 14b können zum Beispiel Lichtschranken sein, welche, beispielsweise durch Laufzeitmessung, den Abstand zu einem Teigstück erfassen können. Aus den Signalen der Sensoranordnung 14, insbesondere der beiden Sensoreinheiten 14a, 14b, kann die Positionierung und/oder die Ausdehnung der auf der ersten Förderanordnung 4 angeordneten Teigstücke berechenbar sein. Dazu können die Sensoreinheit 14a, 14b in einem definierten Abstand zueinander und/oder jeweils in einem definierten Abstand von dem Rand der ersten Förderanordnung 4 angeordnet sein.

Die Ausrichteinheit 7 kann, wie durch die Pfeile 16 angedeutet, beweglich sein. Dadurch kann die Ausrichteinheit 7 dazu konfiguriert sein, ein auf ihr liegendes Teigstück 2 relativ zu der zweiten Förderanordnung 8 zu bewegen, insbesondere auszurichten. Insbesondere kann die Ausrichteinheit 7 dazu konfiguriert sein, das Teigstück 2 relativ zu der zweiten Förderanordnung 8 zu zentrieren.

## Patentansprüche

1. Teigverarbeitungsvorrichtung (1), umfassend:
eine erste Förderanordnung (4), die zum Fördern von Teigstücken (2) entlang eines Produktionspfads (P) konfiguriert ist,
eine zweite Förderanordnung (8), die zum Fördern der Teigstücke (2) entlang des Produktionspfads (P) konfiguriert ist, und
eine Ausrichteinheit (7), die entlang des Produktionspfads (P) zwischen der ersten Förderanordnung (4) und der zweiten Förderanordnung (8) angeordnet und dazu konfiguriert ist, die Teigstücke (2) von der ersten Förderanordnung (4) aufzunehmen, quer zu dem Produktionspfad (P) zu bewegen und an die zweite Förderanordnung (8) zu übergeben, und
eine Sensoranordnung (14), die dazu konfiguriert ist, eine Ausdehnung und/oder eine Positionierung der auf der ersten Förderanordnung (4) angeordneten Teigstücke (2) in einer Messrichtung (M) zu bestimmen, wobei die Messrichtung (M) quer, insbesondere senkrecht, zu dem Produktionspfad (P) orientiert ist,
**dadurch gekennzeichnet, dass** die Sensoranordnung (14) zwei Sensoreinheiten (14a, 14b) umfasst, wobei die Sensoreinheiten (14a, 14b) auf einander gegenüberliegenden Seiten der ersten Förderanordnung (4) angeordnet sind.

2. Teigverarbeitungsvorrichtung nach Anspruch 1, wobei die Ausrichteinheit (7) dazu konfiguriert ist, die Teigstücke (2) basierend auf von der Sensoranordnung (14) empfangenen Signalen quer zu dem Produktionspfad (P) zu bewegen.

3. Teigverarbeitungsvorrichtung nach einem der vorangehenden Ansprüche, wobei die Ausrichteinheit (7) dazu konfiguriert ist, die Teigstücke (2) basierend auf von der Sensoranordnung (14) empfangenen Signalen relativ zu der zweiten Förderanordnung (8) in einer Richtung, die senkrecht zu dem Produktionspfad (P) orientiert ist, zu zentrieren.

4. Teigverarbeitungsvorrichtung nach einem der vorangehenden Ansprüche, wobei die Ausrichteinheit (7) eine dritte Förderanordnung (12) aufweist, die zum Fördern der Teigstücke (2) parallel zu dem Produktionspfad (P) konfiguriert ist.

5. Teigverarbeitungsvorrichtung nach Anspruch 4, wobei die dritte Förderanordnung (12) dazu konfiguriert ist, die Teigstücke (2) wahlweise in eine von zwei einander entgegengesetzten Richtungen zu fördern.

6. Teigverarbeitungsvorrichtung nach Anspruch 4 oder 5, wobei die dritte Förderanordnung (12) ein Förderband (13) aufweist.

7. Verfahren zum Verarbeiten von Teig, umfassend:
Fördern von Teigstücken (2) entlang eines Produktionspfads (P) durch eine erste Förderanordnung (4),
Übergeben der Teigstücke (2) von der ersten Förderanordnung (4) an eine Ausrichteinheit (7),
Bewegen der Teigstücke (2) quer zu dem Produktionspfad (P),
Übergeben der Teigstücke (2) von der Ausrichteinheit (7) an eine zweite Förderanordnung (8),
Bestimmen einer Ausdehnung und/oder einer Positionierung der auf der ersten Förderanordnung (4) angeordneten Teigstücke (2) in einer Messrichtung (M), wobei die Messrichtung (M) quer, insbesondere senkrecht, zu dem Produktionspfad (P) orientiert ist,
**dadurch gekennzeichnet, dass** das Bestimmen durch eine Sensoranordnung (14) erfolgt, die zwei Sensoreinheiten (14a, 14b) umfasst, wobei die Sensoreinheiten (14a, 14b) auf einander gegenüberliegenden Seiten der ersten Förderanordnung (4) angeordnet sind.

8. Verfahren nach Anspruch 7, wobei die Teigstücke (2) basierend auf von der Sensoranordnung (14) empfangenen Signalen quer zu dem Produktionspfad (P) bewegt werden.

9. Verfahren nach Anspruch 7 oder 8, wobei die Teigstücke (2) basierend auf von der Sensoranordnung (14) empfangenen Signalen relativ zu der zweiten Förderanordnung (8) in einer Richtung, die senkrecht zu dem Produktionspfad (P) orientiert ist, zentriert werden.

## Claims

1. Dough processig device (1), comprising:
a first conveying assembly (4) configured to convey dough pieces (2) along a production path (P),
a second conveying assembly (8), configured to convey the dough pieces (2) along the production path (P), und
an aligning unit (7) disposed along the production path (P) between the first conveying assembly (4) and the second conveying assembly (8) and configured to receive the dough pieces (2) from the first conveying assembly (4), move the dough pieces (2) transverse with respect to the production path (P) and transfer the dough pieces (2) to the second conveying assembly (8), and
a sensor assembly (14), configured to determine an extension and/or a positioning of the dough pieces (2) disposed on the first conveying assembly (4) in a measuring direction (M), wherein the measuring direction (M) is oriented transverse, in particular orthogonal, with respect to the production path (P),
**characterized in that** the sensor assembly (14) comprises two sensor units (14a, 14b), wherein the sensor units (14a, 14b) are disposed on opposing sides of the first conveying assembly (4).

2. Dough processing device according to claim 1, wherein the aligning unit (7) is configured to move the dough pieces (2) transverse with respect to the production path (P) based on signals received from the sensor assembly (14).

3. Dough processing device according to one of the preceding claims, wherein the aligning unit (7) is configured to center the dough pieces (2) relative to the second conveying assembly (8) in a direction, which is oriented orthogonally with respect to the production path (P), based on signals received from the sensor assembly (14).

4. Dough processing device according to one of the preceding claims, wherein the aligning unit (7) has a third conveying assembly (12) configured to convey the dough pieces (2) parallel with respect to the production path (P).

5. Dough processing device according to claim 4, wherein the third conveying assembly (12) is configured to selectively convey the dough pieces (2) in one of two opposing directions.

6. Dough processing device according to claim 4 or 5, wherein the third conveying assembly (12) has a conveyor belt (13).

7. Method for processing dough, comprising:
Conveying dough pieces (2) along a production path (P) by a first conveying assembly (4),
Transferring the dough pieces (2) from the first conveying assembly (4) to an aligning unit (7),
Moving the dough pieces (2) transverse with respect to the production path (P),
Transferring the dough pieces (2) from the aligning unit (7) to a second conveying assembly (8),
Determining an extension and/or a positioning of the dough pieces (2) disposed on the first conveying assembly (4) in a measuring direction (M), wherein the measuring direction (M) is oriented transverse, in particular orthogonal, with respect to the production path (P),
**characterized in that** the determining is effected by a sensor assembly (14) comprising two sensor units (14a, 14b), wherein the sensor units (14a, 14b) are disposed on opposing sides of the first conveying assembly (4).

8. Method according to claim 7, wherein the dough pieces (2) are moved transverse with respect to the production path (P) based on signals received from the sensor assembly (14).

9. Method according to claim 7 or 8, wherein the dough pieces (2) are centered relative to the second conveying assembly (8) in a direction, which is oriented orthogonally with respect to the production path (P), based on signals received from the sensor assembly (14).

## Revendications

1. Dispositif de traitement de pâte (1) comprenant :
un premier ensemble de transport (4) configuré pour transporter des morceaux de pâte (2) le long d'un chemin de production (P),
un deuxième ensemble de transport (8) configuré pour transporter les morceaux de pâte (2) le long du chemin de production (P), et
une unité d'alignement (7) disposée le long du chemin de production (P) entre le premier dispositif de transport (4) et le deuxième dispositif de transport (8) et configurée pour recevoir les morceaux de pâte (2) provenant du premier dispositif de transport (4), les déplacer transversalement par rapport au chemin de production (P) et les transférer au deuxième dispositif de transport (8), et
un dispositif de détection (14) configuré pour déterminer une extension et/ou un positionnement des morceaux de pâte (2) disposés sur le premier dispositif de transport (4) dans une direction de mesure (M), la direction de mesure (M) étant orientée transversalement, en particulier perpendiculairement, par rapport au chemin de production (P),
**caractérisé en ce que** le dispositif de détection (14) comprend deux unités de détection (14a, 14b), les unités de détection (14a, 14b) étant disposées sur des côtés opposés du premier dispositif de transport (4).

2. Dispositif de traitement de pâte selon la revendication 1, dans lequel l'unité d'alignement (7) est configurée pour déplacer les morceaux de pâte (2) transversalement par rapport au chemin de production (P) sur la base des signaux reçus par le dispositif de détection (14).

3. Dispositif de traitement de pâte selon l'une des revendications précédentes, dans lequel l'unité d'alignement (7) est configurée pour centrer les morceaux de pâte (2) par rapport au deuxième dispositif de transport (8) dans une direction orientée perpendiculairement au chemin de production (P) sur la base des signaux reçus par le dispositif de détection (14).

4. Dispositif de traitement de pâte selon l'une des revendications précédentes, dans lequel l'unité d'alignement (7) comprend un troisième ensemble de transport (12) configuré pour transporter les morceaux de pâte (2) parallèlement au chemin de production (P).

5. Dispositif de traitement de pâte selon la revendication 4, dans lequel le troisième dispositif de transport (12) est configuré pour transporter les morceaux de pâte (2) de manière sélective dans l'une de deux directions opposées.

6. Dispositif de traitement de pâte selon la revendication 4 ou 5, dans lequel le troisième dispositif de transport (12) comprend une bande transporteuse (13).

7. Procédé de traitement de pâte, comprenant :
le transport de morceaux de pâte (2) le long d'un chemin de production (P) par un premier dispositif de transport (4),
le transfert des morceaux de pâte (2) du premier dispositif de transport (4) vers une unité d'alignement (7),
le déplacement des morceaux de pâte (2) transversalement par rapport au chemin de production (P),
le transfert des morceaux de pâte (2) de l'unité d'alignement (7) vers un deuxième dispositif de transport (8),
la détermination d'une extension et/ou d'un positionnement des morceaux de pâte (2) disposés sur le premier dispositif de transport (4) dans une direction de mesure (M), la direction de mesure (M) étant orientée transversalement, en particulier perpendiculairement, par rapport au chemin de production (P),
**caractérisé en ce que** la détermination est effectuée par un dispositif de détection (14) qui comprend deux unités de détection (14a, 14b), les unités de détection (14a, 14b) étant disposées sur des côtés opposés du premier dispositif de transport (4).

8. Procédé selon la revendication 7, dans lequel les morceaux de pâte (2) sont déplacés transversalement par rapport au chemin de production (P) sur la base des signaux reçus par le dispositif de détection (14).

9. Procédé selon la revendication 7 ou 8, dans lequel les morceaux de pâte (2) sont centrés par rapport au deuxième dispositif de transport (8) dans une direction orientée perpendiculairement au chemin de production (P) sur la base des signaux reçus par le dispositif de détection (14).
